# EUROPÄISCHE PATENTANMELDUNG

(11) **EP 3 907 958 A1**
(43) Veröffentlichungstag der Anmeldung: **10.11.2021**
(21) Anmeldenummer: 20173398.7
(22) Anmeldetag: 07.05.2020
(51) Int. Cl.: H04L 29/06, H04L 29/08, H04L 9/08

(54) **VERFAHREN ZUM AUFBAU EINES SICHEREN ÜBERTRAGUNGSKANALS ZUR DATENÜBERMITTLUNG INNERHALB EINES INDUSTRIELLEN AUTOMATISIERUNGSSYSTEMS**

(71) Anmelder: Siemens Aktiengesellschaft, 80333 München (DE)
(72) Erfinder: Fischer, Thomas, 91056 Erlangen (DE); Höme, Stephan, 91126 Schwabach (DE); Jung, Konstantin, 90537 Feucht (DE); Kerschbaum, Sven, 90768 Fürth (DE); Volkmann, Frank, 90475 Nürnberg (DE)

(57) **Zusammenfassung**

Die Erfindung betrifft ein Verfahren zum Aufbau eines sicheren Übertragungskanals (K1,K2,K3) zur Datenübermittlung innerhalb eines industriellen Automatisierungssystems (1), wobei zumindest ein erster Übertragungskanal (K1) zwischen einer ersten Applikation (Appl) und einer zweiten Applikation (App2) aufgebaut wird, wobei ein Schlüsselserver (SKS) zur Authentifizierung der Applikationen (Appl, App2) genutzt wird, wobei
- in einer Inbetriebnahme-Phase oder in einer der Inbetriebnahme-Phase vorausgehenden Projektierungs-Phase des Automatisierungssystems ein nur dem Schlüsselserver (SKS) und der ersten Applikation (Appl) bekanntes erstes gemeinsames Geheimnis (shS1) generiert wird,
- dass für den Aufbau des ersten Übertragungskanals (K1) die erste Applikation (Appl) an den Schlüsselserver (SKS) eine Anfrage (GSK) bezüglich des für diesen Übertragungskanal (K1) benötigten Schlüssel (key1) stellt, wobei hierfür zwischen der ersten Applikation (Appl) und dem Schlüsselserver (SKS) eine symmetrisch verschlüsselte Verbindung unter Zuhilfenahme des zuvor vergebenen ersten gemeinsamen Geheimnisses (shS1) aufgebaut wird.

## Beschreibung

Die Erfindung betrifft ein Verfahren zum Aufbau eines sicheren Übertragungskanals zur Datenübermittlung innerhalb eines industriellen Automatisierungssystems, wobei zumindest ein erster Übertragungskanal zwischen einer ersten Applikation und einer zweiten Applikation aufgebaut wird, wobei ein Schlüsselserver zur Authentifizierung der Applikationen genutzt wird.

Die Authentifizierung eines Gerätes bei einem Security Key Service (SKS), nämlich dem Schlüsselserver, setzt heutzutage zwingend eine Verwendung einer asymmetrischen Verschlüsselung voraus. Ein Schlüsselserver ist für eine Verteilung und Verwaltung von Schlüsseln verantwortlich, die für sichere, beispielsweise Pubsub-Kommunikation, verwendet werden. Einzelne Schlüssel, die für die symmetrisch verschlüsselte Kommunikation verwendet werden, sind mit einer entsprechenden Security Group ID im System assoziiert. Darüber hinaus ist ein Schlüssel Server für die Autorisierung und Authentifizierung der Teilnehmer verantwortlich. Bei einem Pub Sub Multi Cast kann von beliebigen Teilnehmern der Multi Cast empfangen werden, der Schlüsselserver entscheidet, welche Subscriber das Schlüsselmaterial dazu haben dürfen und somit die Daten entschlüsseln und konsumieren dürfen bzw. können.

Der Publish-Subscriber Mechanismus ist ein Kommunikationsmuster, bei dem sogenannte "Publisher", also Sender von Nachrichten, die gesendeten Nachrichten nicht direkt an adressierte Empfänger schicken, sondern die veröffentlichten (versendeten) Nachrichten lediglich in Klassen eingeteilt werden, ohne Wissen darüber, für welche Empfänger die Nachricht gedacht ist oder ob es zu einem Zeitpunkt überhaupt einen Empfänger gibt. Analog dazu bekunden Empfänger "Subscriber" Interesse an bestimmten Informationen, in dem sie Nachrichten/Klassen abonnieren (subscriben) ohne Kenntnis darüber, ob es ein Versender "Publisher" gibt und wer der Absender ist.

Dieser Mechanismus hat den Vorteil, sich an die zu übertragenen Datenmengen und damit sich auch dynamisch an veränderte Netztopologien anzupassen.

Besondere Aufmerksamkeit erlangt der Publish-Subscriber Mechanismus inzwischen bei Industriellen Automatisierungssystemen zur Überwachung, Steuerung und Regelung von technischen Prozessen, insbesondere im Bereich Fertigungs-, Prozess- und Gebäudeautomatisierung. Es wird ein Betrieb von Steuerungseinrichtungen, Sensoren, Maschinen und industriellen Anlagen ermöglicht, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit vielen, aber relativ kurzen Nachrichten, zwischen Sensoren, Aktoren und Steuerung der Anlage.

In den vergangenen Jahren kam die Anwendung von OPC UA (OPC Unified Architecture) für eine Kommunikation von der Zeitebene bis hin unter zu den Feldgeräten in die Diskussion.

Zur Bündelung aller weltweiten Aktivitäten mit den erweiterten Anforderungen lud deshalb die OPC Foundation im November 2018 zur Gründung der Initiative 'Field Level Communication' (FLC) ein. Ziel ist es, eine offene einheitliche, sichere und standardbasierte Kommunikationslösung für das Industrial Internet of Things - IIoT- zwischen Sensoren, Aktoren, Controllern und einer Cloud anzustreben, welche alle Anforderungen der industriellen Automatisierung erfüllt. Explizit sind damit auch eine deterministische Kommunikation und Maßnahmen zur Betriebssicherheit (funktionales Safety) als optionale Eigenschaft adressiert.

OPC UA definiert entsprechend dem Standard IEC 62541 ein M2M-Kommunikationsprotokoll und ermöglicht es beispielsweise, Maschinenparameter, Regelungsgrößen oder Messwerte semantisch zu beschreiben, so dass derartige Maschinendaten automatisiert ausgewertet werden können. Insbesondere umfasst OPC UA ein objekt-orientiertes Namensraum-Konzept einschließlich Metadaten zur Objektbeschreibung. Durch den OPC UA Server wird ein Instanz- und Typsystem bereitgestellt, innerhalb dessen Clients navigieren und Informationen abrufen können. Darüber hinaus definiert OPC UA mehrere sogenannte Discovery-Mechanismen zur Bekanntmachung von kompatiblen Automatisierungsgeräten und deren Funktionen bzw. Eigenschaften.

In der OPC UA Specification Part 14, (PubSub) wird die OPC Unified Architektur um das (OPC UA) PubSub Kommunikationsmodell definiert.

Unterstützt wird derzeit das Auffinden von Publishern sowie das Auslesen derer Konfiguration (Metadaten) gemäß PubSub-Standard, siehe PublisherlnformationRequest OPC UA Spec Part 14 PubSub Kapitel 7.2.2.4.

In der Anmeldung werden die semantischen Objektbeschreibungen PublisherlnformationRequest UADP Discovery "Probe Network Message" und PublisherlnformationResponse UADP Discovery "Announcement Network Message" genannt.

Publisher und Subscriber können derzeit mit OPC UA Client/ Server-Mechanismen aufgefunden werden. Dies setzt voraus, dass Publisher und Subscriber bekannt sind. Mittels eines OPC UA Client Methodenaufrufs kann man die Konfiguration eines Teilnehmers auslesen - vorausgesetzt der auszulesende Teilnehmer besitzt einen OPC UA Server.

Der Erfindung liegt die Aufgabe zugrunde, ein effizientes nicht zu rechenintensives Verschlüsselungsverfahren anzugeben, welches auch auf kleinen nicht so leistungsfähigen Geräten ablaufen kann.

Bei einem Verfahren zum Aufbau eines sicheren Übertragungskanals zur Datenübermittlung innerhalb eines industriellen Automatisierungssystems, wobei zumindest ein erster Übertragungskanal zwischen einer ersten Applikation und einer zweiten Applikation aufgebaut wird, wobei ein Schlüsselserver zur Authentifizierung der Applikationen genutzt wird, wird die Aufgabe dadurch gelöst, dass in einer Inbetriebnahme-Phase oder in einer der Inbetriebnahme-Phase vorausgehenden Projektierungs-Phase des Automatisierungssystems, ein nur dem Schlüsselserver und der ersten Applikation bekanntes erstes gemeinsames Geheimnis generiert wird, dass für den Aufbau des ersten Übertragungskanals die erste Applikation an den Schlüsselserver einer Anfrage bezüglich des für diesen Übertragungskanal benötigten Schlüssel stellt, wobei hierfür zwischen der ersten Applikation und dem Schlüsselserver eine symmetrisch verschlüsselte Verbindung unter Zuhilfenahme des zuvor vergebenen ersten gemeinsamen Geheimnis aufgebaut wird, dass der Schlüsselserver die Anfrage mit einer Antwort beantwortet, wobei der Schlüsselserver ein zweites neues gemeinsames Geheimnis generiert und dieses mit den benötigten Schlüssel als Antwort an die erste Applikation zurückliefert, wodurch das erste gemeinsame Geheimnis ungültig wird, und das zweite gemeinsame Geheimnis für eine weitere Anfrage übernommen wird, dass Daten über den ersten Übertragungskanal mit dem Schlüssel übertragen werden.

Mit diesem Verfahren wird sichergestellt, dass das gemeinsame Geheimnis ausschließlich für die Verschlüsselung eines Übertragungskanals für den einmaligen Austausch einer Schlüsselgruppe verwendet wird. Um dies zu ermöglichen, wird eine initiale Authentifizierung der Applikationen bzw. der Geräte in der Inbetriebsetzungs-Phase genutzt.

Insbesondere für die zukünftige Kommunikation in industriellen Geräten, wird zum Aufbau des Übertragungskanals zwischen der ersten Applikation und der zweiten Applikation ein Pubsub-Mechanismus verwendet, wobei die erste Applikation als Publisher agiert und die zweite Applikation als Subscriber agiert.

Insbesondere wird eine OPC UA PubSub Kommunikation verwendet.

Je nach Ausgestaltung ist es von Vorteil, wenn der Schlüsselserver für die Autorisierung und Authentifizierung der Applikation verantwortlich ist, und ein Pubsub-Multicast von beliebigen Applikationen empfangen werden kann, wobei der Schlüsselserver entscheidet, welcher Applikation in der Funktion eines Subscribers das benötigte Schlüsselmaterial dazu haben darf und somit die Daten entschlüsseln und konsumieren kann.

Insbesondere für einen Produktivbetrieb eines Automatisierungsgerätes ist es von Vorteil, wenn zumindest eine Applikation auf einem Feldgerät innerhalb des industriellen Automatisierungssystems abläuft und das Feldgerät Daten nach dem OPC UA PubSub Mechanismus bereitstellt.

Als besonderer Vorteil wird hier gesehen, dass auf kleinen Geräten (Feldgeräten) im Produktivbetrieb einer Anlage eine asymmetrische Verschlüsselung viel zu rechenintensiv ist und zu viel Zeit kosten würde.

Ein asymmetrischer Schlüsselaustausch, nämlich ein rechenintensiver, würde bei kleinen Geräten, wie sie in der Automatisierung zum Einsatz kommen, nämlich mehr als 30 Sekunden dauern. In dieser Zeit wäre das Geräte weder ansprechbar noch in der Lage seine automatisierungstechnischen Funktionen zu erfüllen.

Erfindungsgemäß wird mit dem Austauschverfahren und der symmetrischen Verschlüsselung dieser Nachteil behoben.

Das vorgeschlagene Verfahren löst somit das Problem und erlaubt den Einsatz einer sicheren Pubsub-Kommunikation auf kleinen Feldgeräten im Produktivbetrieb.

Mit besonderem Vorteil werden als Feldgeräte Profinet-Feldgeräte an einem Profinet-Feldbus innerhalb des industriellen Automatisierungssystems betrieben.

Auch wird die eingangs genannte Aufgabe durch ein industrielles Automatisierungssystem umfassend einen Schlüsselserver, eine erste Applikation, eine zweite Applikation, wobei der Schlüsselserver zur Authentifizierung der Applikation zum Aufbau eines sicheren Übertragungskanals zwischen der ersten Applikation und der zweiten Applikation ausgestaltet ist, dadurch gelöst, dass der Schlüsselserver und die erste Applikation ausgestaltet sind, in einer Inbetriebnahme-Phase oder in einer der Inbetriebnahme-Phase vorausgehenden Projektierungs-Phase des Automatisierungssystems ein nur dem Schlüsselserver und der ersten Applikation bekanntes erstes gemeinsames Geheimnis entgegenzunehmen, dass die erste Applikation ausgestaltet ist, für den Aufbau des ersten Übertragungskanals an den Schlüsselserver eine Anfrage bezüglich des für diesen Übertragungskanal benötigten Schlüssel zu stellen, weiterhin ausgestaltet, hierfür zwischen der ersten Applikation und dem Schlüsselserver eine symmetrisch verschlüsselte Verbindung unter Zuhilfenahme des zuvor vergebenen ersten gemeinsamen Geheimnisses aufzubauen, dass der Schlüsselserverweiterhin ausgestaltet ist, die Anfrage mit einer Antwort zu beantworten, wobei der Schlüsselserver weiterhin ausgestaltet ist, ein zweites neues gemeinsames Geheimnis zu generieren und dieses mit den benötigten Schlüssel als Antwort an die erste Applikation zurück zu liefern, dabei ist die erste Applikation ausgestaltet, das erste gemeinsame Geheimnis als ungültig zu erklären und das zweite gemeinsame Geheimnis für eine weitere Anfrage zu übernehmen, weiterhin ist die erste Applikation und die zweite Applikation ausgestaltet, Daten über den ersten Übertragungskanal mit dem Schlüssel zu übertragen.

In dem Automatisierungssystem sind die erste Applikation als Publisher ausgestaltet und die zweite Applikation als Subscriber ausgestaltet.

Das Automatisierungssystem weist ein erstes Feldgerät auf, auf welchen die erste Applikation installiert ist und ein zweites Feldgerät, auf welchen die zweite Applikation installiert ist und die Applikationen sind für eine OPC UA Pubsub-Kommunikation ausgestaltet.

Die Zeichnung zeigt ein Ausführungsbeispiel der Erfindung, dabei zeigt
- FIG 1: einen prinzipiellen Ablauf der Anfrage von Schlüsselmaterial für eine sichere Kommunikation,
- FIG 2: ein Automatisierungssystem mit Feldgeräten und einen Schlüsselserver an einem Feldbus.

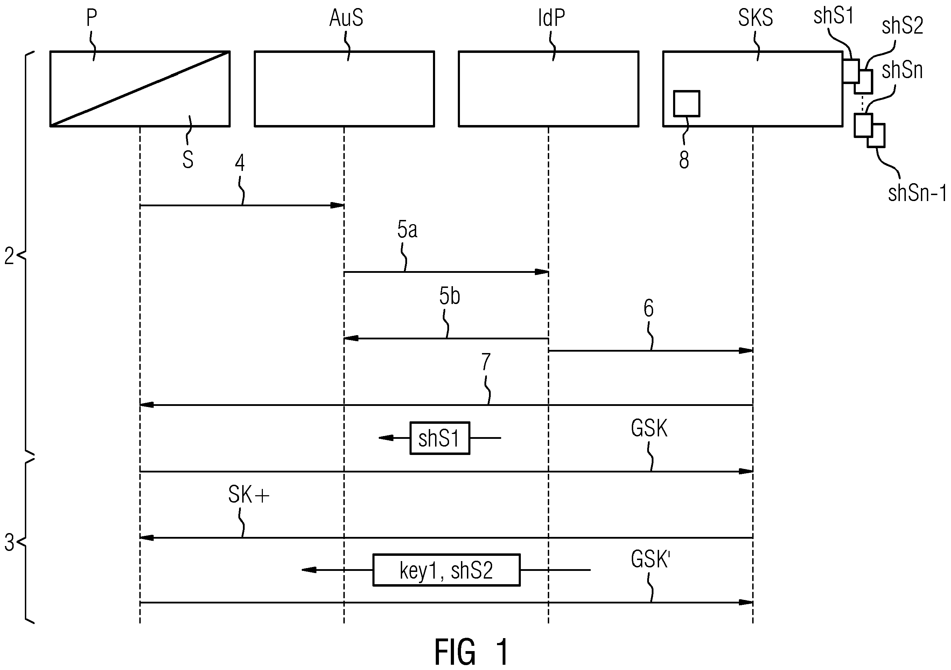

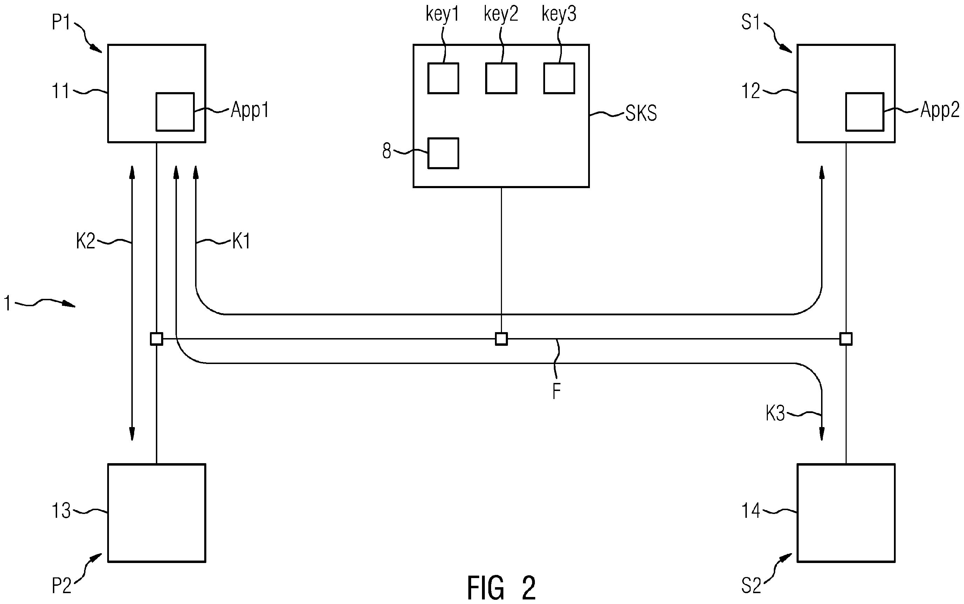

Gemäß FIG 1 ist für ein Verfahren zum Aufbau eines sicheren Übertragungskanals K1,K2,K3 (siehe FIG 2) zur Datenübermittlung innerhalb eines industriellen Automatisierungssystems 1 dargestellt. Als Komponenten könnten zur Verfügung stehen, ein Publisher P oder ein Subscriber S, ein Autorisierungsserver AuS, ein Identitätsanbieter IdP und ein Schlüsselserver SKS. In einer Inbetriebnahme-Phase 2 wird über eine Anmeldung 4 dem Autorisierungsserver AuS eine Publisher ID, eine Schlüsselserver ID und eine entsprechende Rolle mitgeteilt. Über eine Berechtigungsanfrage 5a an den Identitätsanbieter IdP wird die Berechtigung für die Anmeldung 4 geprüft. Der Identitätsanbieter IdP schickt einen Berechtigungsnachweis 5b zurück und erklärt die Anmeldung 4 als gültig. Hieraufhin generiert der Identitätsanbieter IdP entweder eine Generierungsanfrage 6 oder bereits ein erstes gemeinsames Geheimnis ShS1 und teilt dies dem Schlüsselserver SKS mit, wobei der Schlüsselserver SKS wiederum dem anfragenden Publisher P1 über eine Zuteilung 7 das erste gemeinsame Geheimnis ShS1 mitteilt.

Dies entspricht dem in, dass in einer Inbetriebnahme-Phase oder in einer der Inbetriebnahme-Phase vorausgehende Projektierungs-Phase des Automatisierungssystems 1 ein nur dem Schlüsselserver SKS und der ersten Applikation Appl bekanntes erstes gemeinsames Geheimnis shS1 generiert wird.

In einer späteren Wiederholungsphase 3, welches dem ständigen Verbindungsaubau in einen Produktivbetrieb entspricht, wird über eine Anfrage GSK (get security keys) für den Aufbau des ersten Übertragungskanals K1 durch den Publisher P die Anfrage GSK bezüglich des für diesen Übertragungskanal K1 benötigten Schlüssels Key1 gestellt, wobei für diese Anfrage des Publishers P an den Schlüsselserver SKS eine symmetrisch verschlüsselte Verbindung unter Zuhilfenahme des zuvor vergebenen ersten gemeinsamen Geheimnisses shS1 aufgebaut wird.

Der Schlüsselserver SKS beantwortet die Anfrage GSK mit einer Antwort SK+, wobei der Schlüsselserver SKS ein zweites neues Geheimnis shS2 generiert und dieses mit dem benötigten Schlüssel key1 als Antwort SK+ an den Publisher P (oder eben in die Applikation App1) zurückliefert, wodurch das erste gemeinsame Geheimnis sHS1 ungültig wird, und das zweite gemeinsame Geheimnis shS2 für eine weitere Anfrage GSK' übernommen wird, Daten, welche über den ersten Übertragungskanal K1 geliefert werden sollen, werden nun mit dem Schlüssel key1 verschlüsselt und sicher übertragen.

Mit der FIG 2 ist ein Automatisierungssystem 1 dargestellt. Das Automatisierungssystem 1 weist ein erstes Feldgerät 11, ein zweites Feldgerät 12, ein drittes Feldgerät 13 und ein viertes Feldgerät 14 auf. Die Feldgeräte 11,12,13,14 sind über einen Feldbus F miteinander verbunden. Ein Schlüsselserver SKS ist ebenfalls an den Feldbus F angeschlossen. Auf dem ersten Feldgerät 11 ist eine erste Applikation Appl installiert, welche als Publisher P1 ausgestaltet ist. Auf dem zweiten Feldgerät 12 ist eine zweite Applikation App2 installiert, welche als ein erster Subscriber S1 ausgestaltet ist. Das dritte Feldgerät 13 ist beispielsweise als ein zweiter Publisher P2 und das vierte Feldgerät 14 ist beispielsweise als ein zweiter Subscriber S2 ausgestaltet.

Zwischen dem ersten Feldgerät 11 und dem zweiten Feldgerät 12 kann über den Feldbus F ein erster Übertragungskanal K1 aufgebaut werden. Ebenso kann zwischen dem ersten Feldgerät 11 und dem dritten Feldgerät 13 ein zweiter Übertragungskanal K2 aufgebaut werden. Zwischen dem ersten Feldgerät 11 und dem vierten Feldgerät 14 kann über den Feldbus F ein dritter Übertragungskanal K3 aufgebaut werden.

Der Schlüsselserver SKS weist zum Aufbau von sicheren Übertragungskanälen das nötige Schlüsselmaterial auf, so hat er für den ersten Übertragungskanal K1 einen ersten Schlüssel key1, für den zweiten Übertragungskanal K2 einen zweiten Schlüssel key2 und für den dritten Übertragungskanal K3 einen dritten Schlüssel key3 auf Anfrage vorrätig.

Der Schlüsselserver SKS weist einen Geheimnis-Generierungs-Generator 8 auf. In diesem Geheimnis-Generierungs-Generator 8 kann er für den späteren Produktivbetrieb in der Wiederholungsphase 3 (siehe FIG 1) die jeweils neuen gemeinsamen Geheimnisse shS1,shS2,...,shSn-1,shSn generieren und weiter verteilen, wobei damit die zuvor genutzten Geheimnisse ungültig werden.

## Patentansprüche

1. Verfahren zum Aufbau eines sicheren Übertragungskanals (K1,K2,K3) zur Datenübermittlung innerhalb eines industriellen Automatisierungssystems (1), wobei zumindest ein erster Übertragungskanal (K1) zwischen einer ersten Applikation (Appl) und einer zweiten Applikation (App2) aufgebaut wird, wobei ein Schlüsselserver (SKS) zur Authentifizierung der Applikationen (Appl, App2) genutzt wird,
**dadurch gekennzeichnet, dass**
- in einer Inbetriebnahme-Phase oder in einer der Inbetriebnahme-Phase vorausgehenden Projektierungs-Phase des Automatisierungssystems ein nur dem Schlüsselserver (SKS) und der ersten Applikation (App1) bekanntes erstes gemeinsames Geheimnis (shS1) generiert wird,
- dass für den Aufbau des ersten Übertragungskanals (K1) die erste Applikation (App1) an den Schlüsselserver (SKS) eine Anfrage (GSK) bezüglich des für diesen Übertragungskanal (K1) benötigten Schlüssel (key1) stellt, wobei hierfür zwischen der ersten Applikation (App1) und dem Schlüsselserver (SKS) eine symmetrisch verschlüsselte Verbindung unter Zuhilfenahme des zuvor vergebenen ersten gemeinsamen Geheimnisses (shS1) aufgebaut wird,
- dass der Schlüsselserver (SKS) die Anfrage (GSK) mit einer Antwort (SK+) beantwortet, wobei der Schlüsselserver (SKS) ein zweites neues gemeinsames Geheimnis (shS2) generiert und dieses mit dem benötigten Schlüssel (key1) als Antwort (SK+) an die erste Applikation (App1) zurückliefert, wodurch das erste gemeinsame Geheimnis (shS1) ungültig wird, und das zweite gemeinsame Geheimnis (shS2) für eine weitere Anfrage (GSK') übernommen wird,
- dass Daten über den ersten Übertragungskanal (K1) mit dem Schlüssel (key1) übertragen werden.

2. Verfahren nach Anspruch 1, wobei zum Aufbau des Übertragungskanals (K1,K2,K3) zwischen der ersten Applikation (Appl) und der zweiten Applikation (App2) ein PubSub Mechanismus verwendet wird, wobei die erste Applikation (App1) als Publisher (P1, P2) agiert und die zweite Applikation (App2) als Subscriber (S1, S2).

3. Verfahren nach Anspruch 2, wobei eine OPC UA PubSub Kommunikation verwendet wird.

4. Verfahren nach einem der Ansprüche 1 bis 3, wobei der Schlüsselserver (SKS) für die Autorisierung und Authentifizierung der Applikationen (App1,App2) verantwortlich ist, und ein PubSub-Multicast von beliebigen Applikationen empfangen werden kann, wobei der Schlüsselserver (SKS) entscheidet welche Applikation in der Funktion eines Subscriber (S1,S2) das benötigte Schlüsselmaterial dazu haben darf und somit die Daten entschlüsseln und konsumieren kann.

5. Verfahren nach einem der Ansprüche 1 bis 4, wobei zumindest eine Applikation (App1, App2) auf einem Feldgerät (11,12) innerhalb des industriellen Automatisierungssystems (1) abläuft und das Feldgerät (11,12) Daten nach dem OPC UA PubSub Mechanismus bereitstellt.

6. Verfahren nach Anspruch 5, wobei als Feldgeräte (11,12) Profinet-Feldgeräte an einen Profinet-Feldbus (F) innerhalb des industriellen Automatisierungssystems (1) betrieben werden.

7. Industrielles Automatisierungssystem (1) umfassend einen Schlüsselserver (SKS),
eine erste Applikation (App1),
eine zweite Applikation (App2),
wobei der Schlüsselserver (SKS) zur Authentifizierung der Applikationen (App1, App2) zum Aufbau eines sicheren Übertragungskanals (K1) zwischen der ersten Applikation (Appl) und der zweiten Applikation (App2) ausgestaltet ist,
**dadurch gekennzeichnet, dass**
- der Schlüsselserver (SKS) und die erste Applikation (Appl) ausgestaltet sind in einer Inbetriebnahme-Phase oder in einer der Inbetriebnahme-Phase vorausgehenden Projektierungs-Phase des Automatisierungssystems (1) ein nur dem Schlüsselserver (SKS) und der ersten Applikation (App1) bekanntes erstes gemeinsames Geheimnis (shS1) entgegen zu nehmen,
- die erste Applikation (App1) ausgestaltet ist für den Aufbau des ersten Übertragungskanals (K1) an den Schlüsselserver (SKS) eine Anfrage (GSK) bezüglich des für diesen Übertragungskanal (K1) benötigten Schlüssels (key1) zu stellen, weiterhin ausgestaltet hierfür zwischen der ersten Applikation (App1) und dem Schlüsselserver (SKS) eine symmetrisch verschlüsselte Verbindung unter Zuhilfenahme des zuvor vergebenen ersten gemeinsamen Geheimnisses (shS1) aufzubauen,
- der Schlüsselserver (SKS) weiterhin ausgestaltet ist die Anfrage (GSK) mit einer Antwort (SK+) zu beantworten, wobei der Schlüsselserver (SKS) weiterhin ausgestaltet ist ein zweites neues gemeinsames Geheimnis (shS2) zu generieren und dieses mit dem benötigten Schlüssel (key1) als Antwort (SK+) an die erste Applikation (App1) zurückzuliefern, dabei ist die erste Applikation (App1) ausgestaltet, das erste gemeinsame Geheimnis (shS1) als ungültig zu erklären und das zweite gemeinsame Geheimnis (shS2) für eine weitere Anfrage (GSK') zu übernehmen,
- weiterhin sind die erste Applikation (App1) und die zweite Applikation (App2) ausgestaltet Daten über den ersten Übertragungskanal (K1) mit dem Schlüssel (key1) zu übertragen.

8. Automatisierungssystem (1) nach Anspruch 7, wobei die erste Applikation (App1) als Publisher (P1, P2) ausgestaltet ist und die zweite Applikation (App2) als Subscriber (S1, S2) ausgestaltet ist.

9. Automatisierungssystem (1) nach Anspruch 8, aufweisend ein erstes Feldgerät (11), auf welchem die erste Applikation (App1) installiert ist, und ein zweites Feldgerät (12), auf welchem die zweite Applikation (App2) installiert ist und die Applikationen (App1, App2) für eine OPC UA PubSub Kommunikation ausgestaltet sind.
